# EUROPÄISCHE PATENTANMELDUNG

(11) **EP 0 727 366 A2**
(43) Veröffentlichungstag der Anmeldung: **21.08.1996**
(21) Anmeldenummer: 96102157.3
(22) Anmeldetag: 14.02.1996
(51) Int. Cl.: B65G 11/20

(54) **Vorrichtung zur Förderung kleinstückiger Güter**

(30) Priorität: 16.02.1995 DE 19505255
(71) Anmelder: Oranienburger Pharmawerk GmbH, 16515 Oranienburg (DE)
(72) Erfinder: Keck, Jörn-Michael, D-13465 Berlin (DE); Rzehaczek, Heike, D-16515 Friedrichsthal (DE); Claus, Jürgen, D-16515 Oranienburg (DE); Stanke, Michael, D-16761 Henningsdorf (DE); Beyer, Hans-Jürgen, D-13507 Berlin (DE)
(74) Vertreter: Rupp, Herbert, Dr.

(57) **Zusammenfassung**

Es wird eine Vorrichtung zur Förderung mechanisch empfindlicher kleinstückiger Güter über ein schräg abwärts verlaufendes geschlossenes Rohr vorgeschlagen, das dadurch gekennzeichnet ist, daß das schräg verlaufende Rohr 1 an beiden Enden 2, 3 verschlossen ist, beim oben gelegenen Ende einen Einfüllstutzen 4, beim unten gelegenen Ende 3 einen im wesentlichen senkrecht nach unten verlaufenden seitlichen Auslaufstutzen 5, sowie einen im Rohrinneren 6 zwischen den beiden Enden 2, 3 des Rohres hin und her bewegbaren, den Innenquerschnitt des Rohres 1 weitgehend ausfüllenden Pfropfen 7 aufweist.

## Beschreibung

### Technisches Gebiet

Die Erfindung bezieht sich auf eine Vorrichtung zur Förderung mechanisch empfindlicher kleinstückiger Güter über ein schräg abwärts verlaufendes geschlossenes Rohr.

### Stand der Technik

Auf vielen Gebieten der Technik besteht das Problem, empfindliche kleinstückige Güter von einem höhergelegenen Niveau auf ein tiefergelegenes Niveau zu fördern. Beispielsweise ist es in der großtechnischen pharmazeutischen Produktion des öfteren erforderlich, feste Darreichungsformen, wie z.B. Tabletten, Filmtabletten, Dragees und Kapseln, in vertikaler Richtung von oben nach unten unter Ausnutzung der Schwerkraft zu fördern. Solange nur Niveauunterschiede von 300 bis 500 mm zu überwinden sind, ist in der Regel bei Verwendung von Fallrohren noch nicht mit untolerierbaren mechanischen Einwirkungen auf die Darreichungsformen zu rechnen. Bei größeren Höhendifferenzen ist jedoch mit einer erheblichen mechanischen Belastung zu rechnen, die zu unerwünschtem Abrieb oder Bruch führen kann. Anstelle von Fallrohren müssen in solchen Fällen deshalb Behältnisse zum Transport des empfindlichen Fördergutes eingesetzt werden, was relativ aufwendig ist.

In der DE-PS 4041706 wird vorgeschlagen, bei der Förderung von Tabletten über Förderrohre von einem höhergelegenen Ort in tiefergelegene Transportbehälter in den Förderrohren eine von unten nach oben gerichtete Luftströmung zu erzeugen, so daß die Tabletten entgegen dem Widerstand des Luftstromes langsam nach unten sinken. Nachteilig an diesem Verfahren ist die schwierige Steuerung und Anpassung des Luftstromes an das zu fördernde Gut sowie die insbesondere im Falle des Auftretens von Turbulenzen zu beobachtende mechanische Belastung des Fördergutes.

Die der vorliegenden Erfindung zugrundeliegende Aufgabe wird in der Zurverfügungstellung einer Vorrichtung zur Förderung mechanisch empfindlicher kleinstückiger Güter von einem höheren Niveau auf ein tiefergelegenes Niveau gesehen, die sich durch eine qualitätsschonende Förderung auch über große Höhendifferenzen, eine wenig aufwendige Handhabung und Eignung für unterschiedliches Fördergut ohne die Notwendigkeit besonderer Anpassungsmaßnahmen auszeichnet.

### Beschreibung der Erfindung

Gelöst wird diese Aufgabe durch ein schräg verlaufendes Rohr, das an beiden Enden verschlossen ist, dessen oben gelegenes Ende einen Einfüllstutzen, dessen unten gelegenen Ende einen im wesentlichen senkrecht nach unten verlaufenden seitlichen Auslaufstutzen, sowie im Rohrinneren einen zwischen den beiden Enden des Rohres hin und her bewegbaren, den Innenquerschnitt des Rohres weitgehend ausfüllenden Pfropfen aufweist.

Gegenstand der Erfindung ist daher eine Vorrichtung zur Förderung mechanisch empfindlicher kleinstückiger Güter über ein schräg abwärts verlaufendes geschlossenes Rohr, die dadurch gekennzeichnet ist, daß das schräg verlaufende Rohr an beiden Enden verschlossen ist, beim oben gelegenen Ende einen Einfüllstutzen, beim unten gelegenen Ende einen im wesentlichen senkrecht nach unten verlaufenden seitlichen Auslaufstutzen, sowie einen im Rohrinneren zwischen den beiden Enden des Rohres hin und her bewegbaren, den Innenquerschnitt des Rohres weitgehend ausfüllenden Pfropfen aufweist.

Weitere Gegenstände ergeben sich aus den Patentansprüchen.

Die Bewegung des Pfropfens kann auf übliche Weise über einen Faden manuell oder automatisch über eine Seilwinde mit Antriebsaggregat oder mittels Druckluft erfolgen. Zu Beginn des Eintrags von Fördergut durch den Einfüllstutzen steht der bewegliche Pfropfen knapp unterhalb des Einfüllstutzens, wo ein die weitere Bewegung des Pfropfens nach oben begrenzender Anschlag vorgesehen sein kann. Entsprechend der Menge des durch den Einfüllstutzen eintretenden Fördergutes wird der Pfropfen nach unten bewegt. Sobald der Pfropfen sich über die Öffnung des Auslaufstutzens hinwegbewegt, entleert sich das schräg abwärts verlaufende Rohr. Nach Entleerung der Rohres wird der Pfropfen wieder bis knapp unterhalb den Einfüllstutzen bewegt, damit sich erneut eine Säule von Fördergut aufbauen kann, die mit geeigneter Geschwindigkeit gesteuert durch die Abwärtsbewegung des Pfropfens in Richtung auf den Auslaufstutzen bewegt wird. Es ist zweckmäßig, die Bewegung des Pfropfens selbsttätig in Abhängigkeit von der Menge des durch den Einfüllstutzen eintretenden Fördergutes zu regeln. Die Bewegung des Pfropfens kann beispielsweise durch die Leistung der das Fördergut produzierenden Vorrichtungen, wie beispielsweise Tablettenpressen, oder die Geschwindigkeit nachgeschalteter Vorrichtungen für die weitere Verarbeitung, wie beispielsweise Konfektionierungslinien, gesteuert werden. Es versteht sich von selbst, daß die erfindungsgemäße Vorrichtung mit Sensoren zur Überwachung und Steuerung des Flusses des Fördergutes, wie beispielsweise Lichtschranken, ausgerüstet werden kann.

In einer besonderen Ausführungsform können der Einfüllstutzen und/oder der Auslaufstutzen mit Einrichtungen zum manuellen oder selbsttätigen Andocken an Fördergut liefernde bzw. abnehmende Vorrichtungen ausgestattet sein. In einer als Beispiel angegebenen erfindungsgemäßen Ausführungsform ist das schräge Rohr als Plexiglasrohr von ca. 4 m Länge und ca. 70 mm Durchmesser ausgeführt, das mit einer Neigung von etwa 45 Grad in einer an der Decke abgehangenen beweglichen Haltevorrichtung arretiert ist.

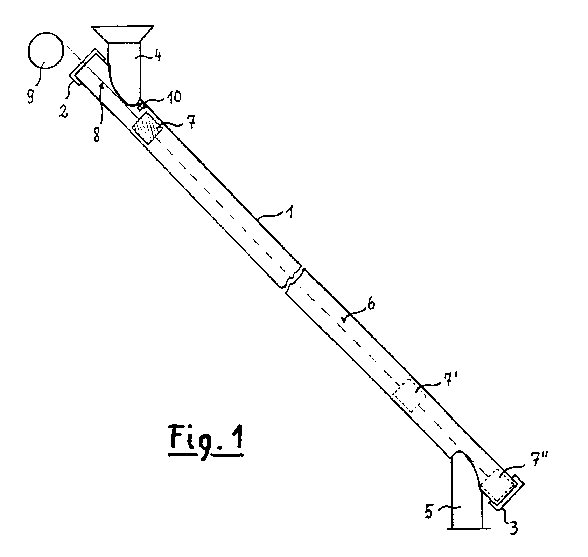

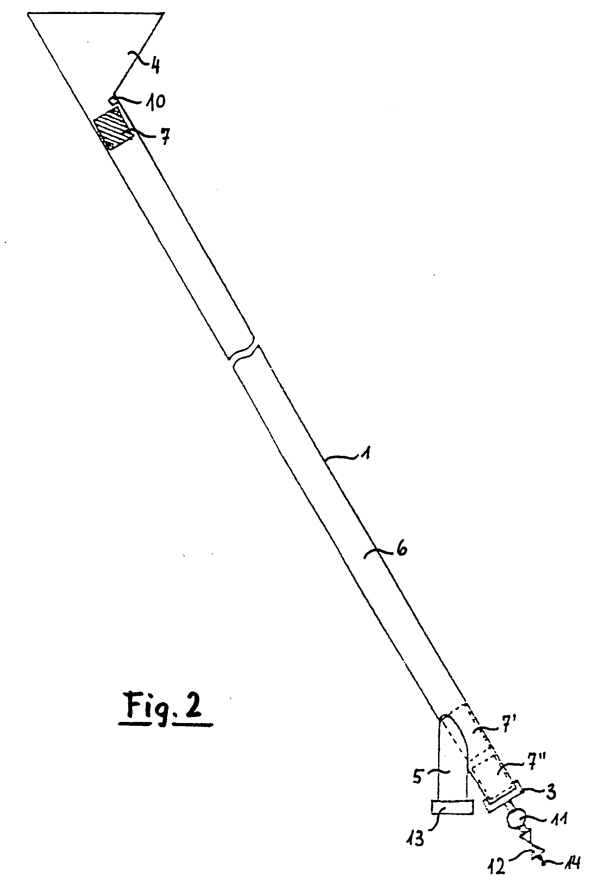

Fig. 1 und 2 zeigen teilweise schematisch Ausführungsformen erfindungsgemäßer Fördervorrichtungen im Querschnitt.

In der Ausführungsform nach Fig. 1 ist ein schräg abwärts verlaufendes Rohr 1 an beiden Enden 2, 3 verschlossen. Nahe beim oberen Ende 2 mündet von oben her ein Einfüllstutzen 4 am Rohr 1. Kurz vor dem unteren Ende 3 ist ein nach unten verlaufender Auslaßstutzen 5 vorgesehen. Im Innern 6 des Rohres ist ein den Innenquerschnitt weitgehend ausfüllender Pfropfen 7 über einen Faden 8 zwischen einem Anschlag 10 knapp unterhalb des Einfüllstutzens 4 und dem unteren Ende 3 des Rohres bewegbar angeordnet. Mit den Bezugszeichen 7' und 7" sind zwei weitere Lagen des Pfropfens angedeutet. Der Faden 8 ist durch eine schematisch angegebene Seilwinde 9 bewegbar.

Das Rohr 1 der in Fig. 2 dargestellten Ausführungsform endet oben in einem Einfüllstutzen 4. Kurz vor dem unteren Ende 3 des Rohres 1 ist ein Auslaßstutzen 5 vorgesehen, der durch ein Absperrorgan 13 verschließbar ist. Am unteren Ende 3 ist eine Druckluftleitung 14 mit einem Absperrventil 12 und einem Druckminderer 11 an das Rohr 1 angeschlossen. Der den Innenquerschnitt des Rohres 1 weitgehend ausfüllende Pfropfen 7 ist zwischen einem Anschlag 10 unterhalb des Einfüllstutzens 4 und dem unteren Ende 3 des Rohres mittels durch die Druckluftleitung einbringbare Druckluft bewegbar. Zu Beginn des Einfüllens von zu transportierendem Material befindet sich Pfropfen 7 am oder nahe dem oberen Anschlag 10. In dem Maße wie Material zugeführt wird, wird Pfropfen 7 durch entsprechende Steuerung des Druckluftstroms in Richtung auf das untere Ende 3 des Rohres 1 abgesenkt. Sobald Pfropfen 7 in Höhe des Auslaßstutzens 5 angelangt ist (Stellung 7'), wird das Absperrorgan 13 geöffnet. Mit dem Absenken des Pfropfens 7 in die untere Endstellung 7" verläßt das transportierte Material das Rohr 1 über den Auslaßstutzen 5. Nach Verschließen des Absperrorgans 13 wird Pfropfen 7 erneut bis zum Anschlag 10 am oberen Rohrende bewegt.

## Patentansprüche

1. Vorrichtung zur Förderung mechanisch empfindlicher kleinstückiger Güter über ein schräg abwärts verlaufendes geschlossenes Rohr, dadurch gekennzeichnet, daß das schräg verlaufende Rohr (1) an beiden Enden (2,3) verschlossen ist, beim oben gelegenen Ende (2) einen Einfüllstutzen (4), beim unten gelegenen Ende (3) einen im wesentlichen senkrecht nach unten verlaufenden seitlichen Auslaufstutzen (5), sowie einen im Rohrinneren (7) zwischen den beiden Enden (2,3) des Rohres (1) hin und her bewegbaren, den Innenquerschnitt des Rohres weitgehend ausfüllenden Pfropfen (7) aufweist.

2. Vorrichtung nach Anspruch 1, dadurch gekennzeichnet, daß knapp unterhalb des Einfüllstutzens (4) ein Anschlag (10) für den Pfropfen (7) vorgesehen ist.

3. Vorrichtung nach Anspruch 1, dadurch gekennzeichnet, daß der Pfropfen (7) über einen Faden (8) hin und her bewegbar ist.

4. Vorrichtung nach Anspruch 3, dadurch gekennzeichnet, daß der Faden (8) über eine Seilwinde (9) gesteuert wird.

5. Vorrichtung nach Anspruch 1, dadurch gekennzeichnet, daß der Pfropfen (7) über Druckluft gesteuert wird.
